# EUROPEAN PATENT APPLICATION

(11) **EP 2 355 018 A1**
(43) Date of publication of application: **10.08.2011**
(21) Application number: 10152955.0
(22) Date of filing: 08.02.2010
(51) Int. Cl.: G06Q 10/00

(54) **Providing calendar notifications based on changes in traffic patterns**

(71) Applicant: Research In Motion Limited, Waterloo, ON N2L 3W8 (CA)
(72) Inventor: Proulx, David Rene, Waterloo Ontario N2L 0A4 (CA); Currie, Robert, Mississauga Ontario L4W 0B5 (CA)
(74) Representative: Patel, Binesh

(57) **Abstract**

Provided is a method of providing calendar notification information on a mobile device. The location of the mobile device and the location of a calendar entry are sent to a remote server. The remote server gathers real-time traffic information along the route between the mobile device and the calendar entry and provides the mobile device with an estimated travel time.

## Description

### Field

The present matter relates to mobile communication devices, and more particularly to a method of providing calendar notifications based on real-time travel information.

### Background

People often use calendar applications, such as personal information managers (PIMS), to keep organized. For example, a calendar application may be used to maintain or keep track of scheduled meetings or events.

### Brief Description of the Drawings

In order that the subject matter may be readily understood, embodiments are illustrated by way of examples in the accompanying drawings, in which:
**Figure 1** is a block diagram illustrating a telecommunication infrastructure;
**Figure 2** is a block diagram illustrating components of a mobile device;
**Figure 3** depicts a day view of a calendar application on a mobile device;
**Figure 4** depicts an entry view of a calendar application on a mobile device ;
**Figure 5** is a block diagram illustrating a network with a server, probes and a mobile device; and,
**Figure 6** is a flow chart illustrating a method of providing a calendar notification.

### Detailed Description

Described herein is a computer implemented method of providing calendar notification information on a mobile device having a user interface. The method comprises the steps of requesting an estimated travel time between a determined geospatial location of the mobile device and a determined geospatial location of a calendar entry from a remote server, the calendar entry having a start time; receiving the estimated travel time from the remote server in response to the request; and, selectively providing a cue in response to the estimated travel time.

Also described is a computer readable memory having instructions stored thereon to configure a processor for providing calendar notification information on a mobile device having a user interface. The device comprises a calendar notification module comprising: a calendar application for receiving the location of a calendar entry, the calendar entry having a start time; a locator system for determining the geospatial location of the mobile device; an estimated time of arrival agent for requesting from a remote server the travel time between the geospatial location of the mobile device and the geospatial location of the calendar entry, the estimated time of arrival agent for receiving from the remote server in response to the request the estimated travel time between the geospatial location of the mobile device and the geospatial location of the calendar entry; and a cue provider for selectively providing a cue in response to the estimate travel time.

Also described is a computer program product having computer readable code embodied therein, for execution by a processor for configuring a mobile device having a user interface to provide calendar notification information on the user interface. The computer program product comprises instructions and data for configuring a processor of the mobile device to request an estimated travel time between a determined geospatial location of the mobile device and a determined geospatial location of a calendar entry from a remote server, the calendar entry having a start time; receive the estimated travel time from the remote server in response to the request; and, selectively provide a cue in response to the estimated travel time.

Generally, the geospatial location of a mobile device and the geospatial location of a calendar entry are sent to a remote server. The remote server gathers real-time traffic information along the route between the mobile device and the calendar entry and provides the mobile device with an estimated travel time.

Calendar appointments or calendar entries in personal information managers (PIMs) do not take into account travel times between destinations. For example, two separate hour-long appointments beginning one hour apart may be considered valid by a calendar application even if the appointments are geospatially separated by more than one hour of travel time.

Users may be forced to estimate travel times based on personal experience or historic static traffic references.

Calendar applications may use a geospatial lookup of the appointments (assuming locations are known). However, these geospatial lookups assume static or consistent travel times, when in reality travel times may be subject to the time of day, traffic patterns, unforeseen incidents, or a variety of other factors.

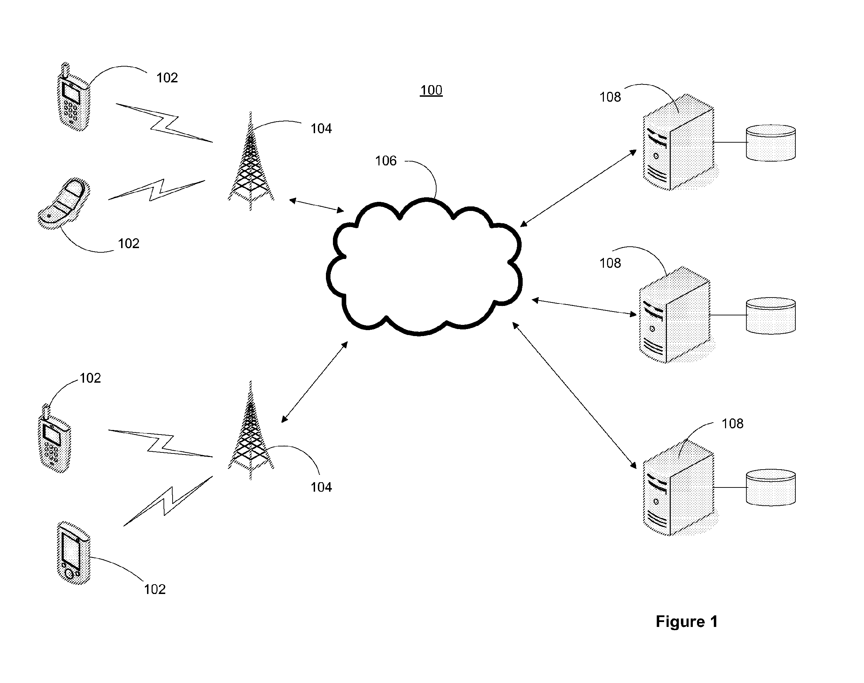

For convenience, like numerals in the description refer to like structures in the drawings. Referring to Figure 1, a typical telecommunication infrastructure is illustrated generally by numeral 100. The telecommunication infrastructure 100 includes a plurality of mobile devices 102, a plurality of base stations 104, a communication network 106 and a plurality of network servers 108.

The mobile devices 102 include wireless computing devices such as a smart phone, a personal digital assistant (PDA), and the like. The mobile devices 102 are in communication with one of the base stations 104. The base stations relay data between the mobile devices 102 and the network servers 108 via the communication network 106. Accordingly, the communication network 106 may include several components such as a wireless network, a relay, a corporate server and/or a mobile data server for relaying data between the base stations 104 and the network servers 108.

The network servers 108 include servers such as a Web server, an application server 108, and an application server with web services. It will be appreciated by a person of ordinary skill in the art that the telecommunication infrastructure 100 described herein is exemplary and that changes may be made to one or more components to accommodate different network configurations without affecting the scope of the aspects described herein.

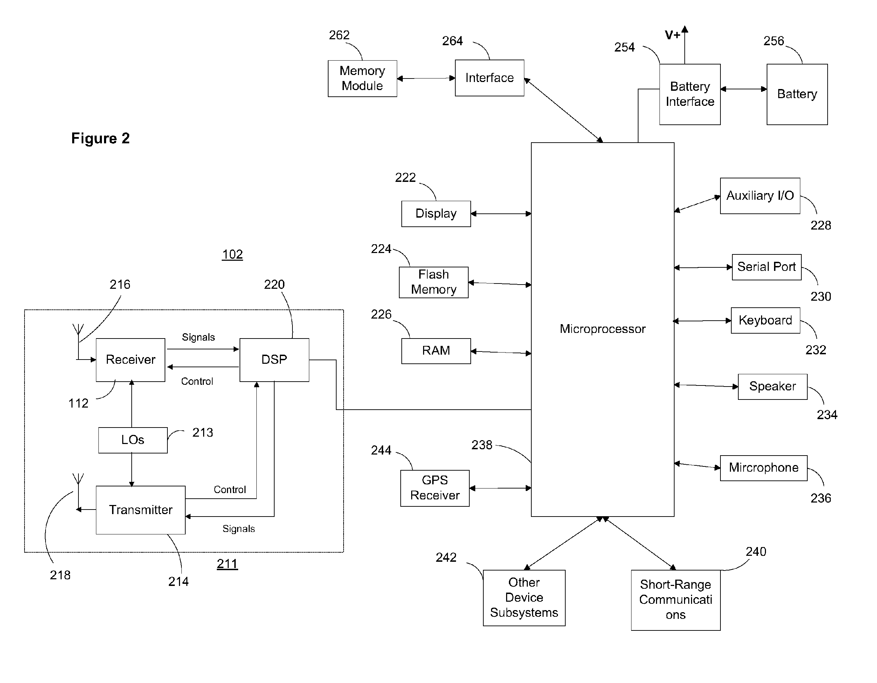

Referring to Figure 2, a typical mobile device 102 is illustrated in greater detail. The mobile device 102 is often a two-way communication device having both voice and data communication capabilities, including the capability to communicate with other computer systems. Depending on the functionality provided by the mobile device 102, it may be referred to as a data messaging device, a two-way pager, a cellular telephone with data messaging capabilities, a wireless Internet appliance, or a data communication device.

The mobile device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The mobile device 102 includes a microprocessor 238 which controls general operation of the mobile device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth™ for example, and any other device subsystems or peripheral devices generally designated at 242. The mobile device 102 may also include a positioning device 244, such as a GPS receiver, for receiving positioning information.

Operating system software used by the microprocessor 238 may be stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, enables execution of software applications on the mobile device 102. A predetermined set of applications, which control basic device operations, is installed on the mobile device 102 during its manufacture. These basic operations typically include data and voice communication applications, for example. Additionally, applications may also be loaded onto the mobile device 102 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the mobile device 102 and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of mobile device 102, the user may have access to other types of input devices, such as, for example, a scroll wheel, trackball, light pen or touch sensitive screen.

Location-based applications executing on the mobile device 102 use positioning information from the positioning device 244 to provide relevant information to the user, often in real-time. The positioning device 244 may be a GPS receiver for receiving satellite broadcasts. In one embodiment, the satellite broadcast data is used by the mobile device 102 to determine its position. In another embodiment, the satellite broadcast data is transmitted from the mobile device 102 to one of the network servers 108 to determine the position of the mobile device 102.

Alternatively, the positioning device 244 may be a positioning module for receiving positioning information from one of the network servers 108. In this embodiment, the positioning module may comprise a software, rather than a hardware, solution.

A personal information manager (PIM), such as a calendar application, may be operating on the mobile device 102.

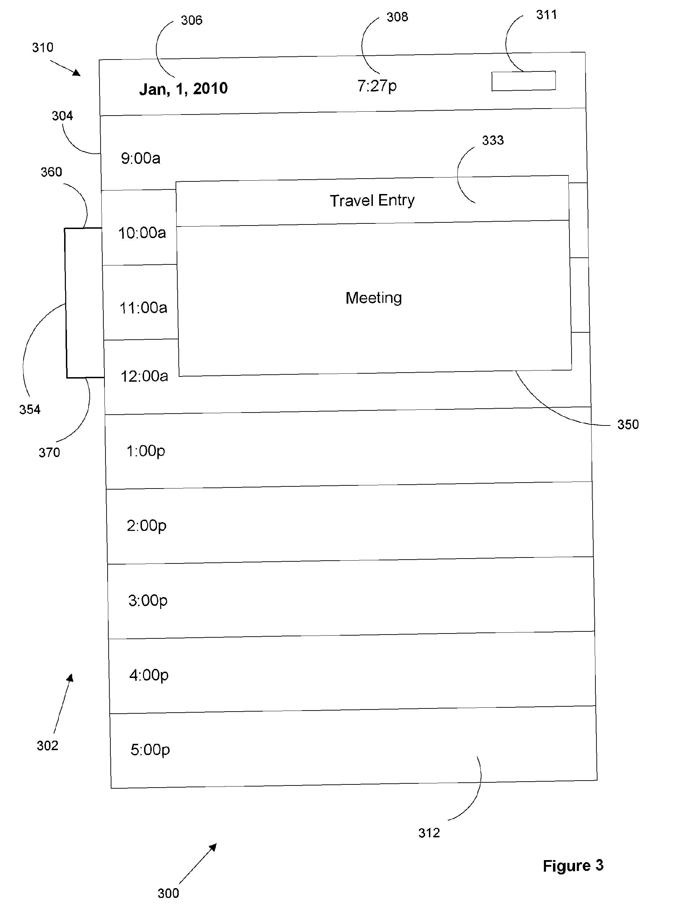

Figure 3 depicts a day view 300 of a graphical user interface of a calendar application operating on a mobile device 102. The day view 300 shows the calendar entries (e.g. 333, 350) for a particular day.

The day view 300 may have a table with time slots (e.g. 312) between rows 302, each row representing a time of day 304 (e.g. 9:00 am). There may be indicators along the top edge 310 of the day view, such as the present date 306 ("Jan 1,2010"), the present time 308 ("7:27 p") and the day of the week 311.

Calendar entries 333, 350 may be visible in the day view. For example, the subject of a calendar entry 350 (e.g. "Meeting") may be displayed in a time slot 312. There may also be a calendar entry 350 duration indicator 354 showing the start time 360 and end time 370 of the calendar entry 350. A dynamic travel entry 333 a described further herein below may also be visible in the day view and may be displayed similarly to another calendar entry 350.

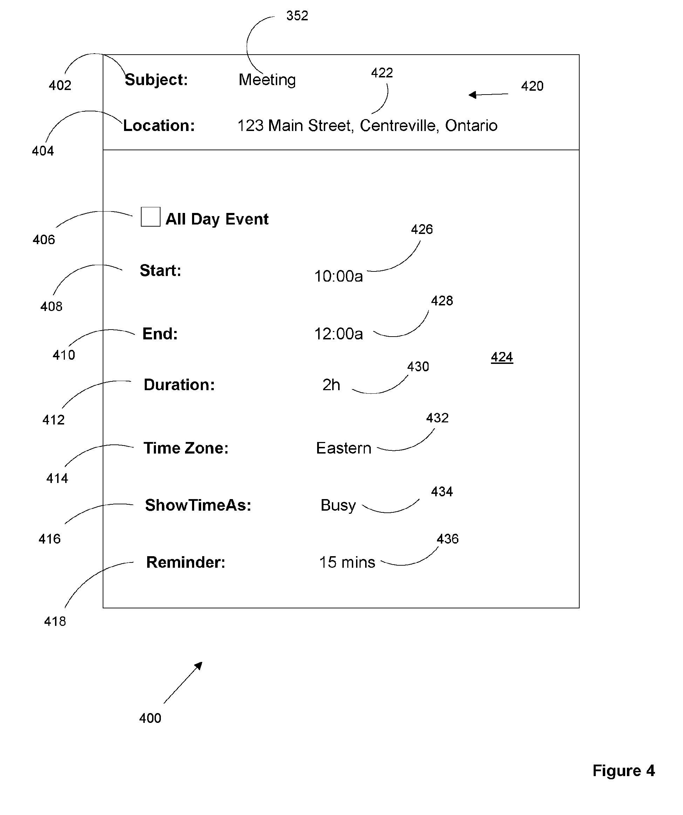

Figure 4 shows a calendar entry view 400 of the calendar application. The calendar entry view 400 shows the details (i.e. specific calendar entry data) of a single calendar entry 350 displayed in the calendar day view 300.

The calendar entry view 400 has a top portion 420 displaying fields for subject 402 and location 404. The subject field 402 may contain a subject entry 352 (such as "Meeting"). The location 404 field may contain a geospatial location entry 422 (such as "123 Main Street, Centreville, Ontario"). The geospatial location entry 422 may be an address (e.g. a street address) and/or may contain latitudinal and longitudinal coordinates. Further, a GPS associated with the device 102 may calculate and/or provide the coordinates (i.e. latitudinal and longitudinal coordinates) for a given address (e.g. a street address). Thus, the coordinates of an address entered into the location 404 field may be determined by the mobile device 102 (e.g. using an internal GPS) and stored in memory of the device 102.

The middle portion 424 of the calendar entry view 400 has a number of fields listed in rows. The all day event field 406 may have a check-box indicating with a check or cross, for example, whether the respective calendar entry 350 will occur throughout the entire day. The start field 408 may have an entry 428 indicating the start time of the calendar entry 350 (such as "10:00a"). Similarly the end field 410 may have an entry 430 indicating the ending time of the calendar entry 350 (such as "12:00a").

The duration field 412 may have an entry 430 indicating the duration of the calendar entry 350 (such as "2h", or two hours). The time zone field 414 may have an entry indicating the applicable time zone (such as "Eastern"). The show-time-as field 416 may have an entry indicating whether the user's time for the duration of the respective calendar entry is busy, free, tentative, out of office, etc.

There may be a reminder field 418 for which there may be a selection of time durations 436 (such as "15 mins"). This time duration indicates the amount of time before the starting time of the calendar entry 428 when an audible, tactile and/or visual alarm will sound or emit.

The information displayed next to or in association with each field may be manually entered (e.g. using a keypad, roller ball or touchscreen) or automatically entered (e.g. after being processed). The calendar events (e.g. items) may be synchronized with a calendar on a remote server (e.g. an enterprise server).

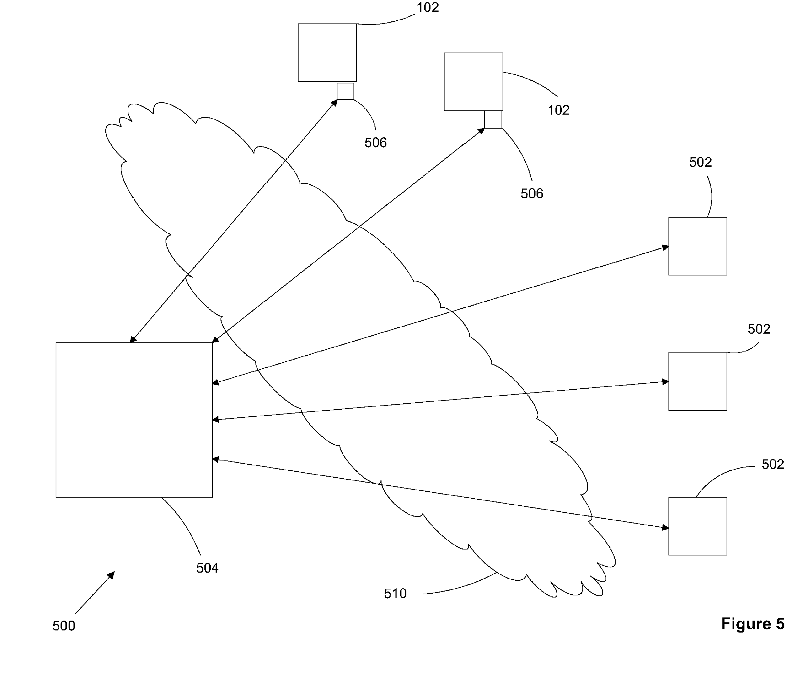

Figure 5 is a block diagram 500 showing location-aware devices or probes 502 communicating with a central server 504 and with a mobile device 102 across a network 510. The network 510 may be a cellular network or other wireless network (such as a LAN or WAN). The central server 504 may be in communication with the probes 502 and the mobile device 102 across the network 510, and vice versa. The probes 502 may also be in communication with the mobile device 102 across the network 510, and vice versa. The central server 504 may have memory and a processor. Similarly, the probes 502 may each have memory and a processor. The probes 502 monitor the travel times in real-time across defined segments of a road. For example, the probes 502 may comprise a radar gun for measuring the speed of vehicles moving on at least one certain or defined road segment. The probes 502 may monitor other travel information such as the number and type of cars travelling on a certain or defined road segment. The probes 502 may store these travel times and/or the travel information in memory and may communicate these travel times and/or the travel information to the central server 504. The central server 504 may store in memory these travel times or the travel information along with the identity of the probe 502 that communicated the travel times or travel information. The server 504 may also be aware of the location of the probes 502 and the road segments that each probe 502 is monitoring. This information may, for example, be communicated to the server 504 by the probes 502 or the server 504 may poll the probes 502 to determine the road segment(s) that each probe 502 monitors. It is recognized that each probe 502 may monitor more than one road segment.

The server 504 may compile or process the real-time travel times and road segments stored in memory and calculate an estimated traffic flow (or velocity or speed) of vehicles or travellers across each of the various road segments. The server 504 maintains this traffic flow information in memory and updates it each time a probe 502 communicates travel information to the server 502. The probes 502 may periodically push or communicate travel times and/or information concerning road segments across the network 510 to the server 504. Alternatively, or additionally, the server 504 may periodically poll or query the probes 502 for travel times along with the associated road segments. The server 504 may maintain travel times for least one route across each road segment, where a road segment may comprise a segment of road between two given locations.

The mobile device 102 further comprises an Estimated Time of Arrival (ETA) agent 506. The ETA agent 506 is in communication with the server 504 across the network 510. The ETA agent 506 may periodically query the server 504 with a request for an optimal travel route between two geospatial locations (e.g. a starting geospatial location and an ending geospatial location). The two geospatial locations may be communicated by the ETA agent 506 to the server 504. The server 504 processes the request along with the traffic flow information (as stored in memory or obtained from the probes 502) using the processor and determines an optimal or near-optimal route between the two geospatial locations and communicates this determined route back across the network 510 to the ETA agent 506 on the mobile device 102. The optimal or near-optimal route is, for example, the route with the least amount or near-least amount of estimated travel time between two given geospatial locations. There may be other definitions of optimal or near-optimal routes that are suitable. The two geospatial locations may, for example, each be on road segments that are associated with probes 502. Alternatively, the server 504 may process the request along with the traffic flow information using the processor and determine only the estimated travel time between the two geospatial locations.

One or both of the geographic locations may not be located on road segments that are associated with probes 502. If a geographic location is not on a road segment that is associated with a probe 502, then the processor on the server 504 may calculate an estimated travel time using instead the nearest point on a road segment to that geospatial location. Further, the server 504 may, for example, extrapolate travel distances from a nearby point on a monitored road segment.

The server 504 may obtain or receive traffic information from another service (e.g. a remote service which provides traffic information). Additionally, or alternatively, the traffic information may be provided to the server 504 or the ETA agent 506 through a user input device.

Algorithms for estimating or determining optimal or near-optimal routes between two locations from a finite number of routes given the travel time across at least one segment of a route are familiar to a person of ordinary skill in the art.

The server 504 may also communicate the travel time of the determined optimal or near-optimal route between two geospatial locations and provide this travel time to the ETA agent 506 in response to a query from the ETA agent 506.

The two geospatial locations sent by the ETA agent 506 to the server 504 may comprise the present geospatial location of the mobile device 102 on which the ETA agent 506 resides, and the geospatial location of a calendar event as indicated, for example, in the location field 404. Thus, the ETA agent 506 may communicate a pair of geospatial locations to the server 504 that represent the present location of the mobile device 102 and the location of a calendar event.

The present location of the mobile device 102 may, for example, be calculated or determined using a Global Positioning System (GPS) or other similar device or remote service (e.g. by triangulation of wireless signals). Further, the present location of the mobile device 102 may be an address entered by the user through a user interface on the mobile device 102.

The server 504 receives these two geospatial locations with an indication of which one is the starting location and which one is the ending location. The server 504 determines travel information, including the optimal or near optimal route as well as the estimated travel-time for the determined route. The server communicates this travel information over the network 510 to the mobile device 102.

Further, the server 504 may determine alternative routes between two given geospatial locations along with the estimated travel times for travelling on these routes. Any number of these alternative routes may be communicated from the server 504 to the mobile device 102. The routes determined by the server 504 and/or communicated to the mobile device 102 may, for example, be limited to those routes confined to a certain geospatial location or to those routes that are estimated to take less than a given amount of time as determined using the travel information provided by the probes 502.

Referring to Figure 3, the travel information may be used by the mobile device 102 to automatically create a travel-time calendar entry 333 representing the estimated travel time required to get to the location of the calendar entry 350 (that being one of the two geospatial locations previously sent to the server 504). For example, the estimated travel time received from the server 504 may be subtracted from the start time 360 of the existing calendar entry. The resulting time may be used as the start time 360 for the travel-time calendar entry. The end time 370 for the travel-time calendar entry 333 will correspond to the start time 360 for the existing calendar entry 350 to which the travel-time calendar entry 333 relates. This travel-time calendar entry 333 thereby represents the required travel time for getting to the geospatial location of the existing calendar entry 350. Further, the mobile device 102 may store the optimal or near optimal route between two geospatial locations in memory as received from the server 504. This optimal or near optimal route may be used with a map application on the mobile device 102. For example, the optimal or near optimal route may be highlighted in a view of an application which displays street maps (e.g. Google™ maps).

Alternatively, a the two geospatial locations sent by the ETA agent 506 to the server 504 may comprise the geospatial location of a first calendar entry 350 and the geospatial location of a second calendar entry 350. The first calendar entry 350 precedes the second calendar entry 350 without any intervening calendar entries 350. The server 504 uses these two geospatial locations (with the first calendar entry 350 being the starting location) to determine the travel information therebetween. This travel information, once received by the ETA agent 506 and/or mobile device 102 is used to automatically create a travel-time calendar entry 333 associated with the second calendar entry. This travel-time calendar entry 333 represents the estimated travel time required to get to the location of the second calendar entry 350 starting from the first calendar entry 350.

Calendar entries 350 may not be associated with a geospatial location. The mobile device 102 or ETA agent 506 may then use or associate default geospatial locations for these calendar entries 350. For example, a default or predefined ending location may be sent to the server 504 when the calendar entry 350 representing the ending location is not otherwise associated with a geospatial location. Calendar entries 350 occurring during certain predefined times (e.g. on a weekday during business hours) may be automatically associated with a predefined geospatial location (e.g. the office building). The default geospatial location may be a frequently used geospatial location (e.g. home, work, etc.).

When the travel-time calendar entry 333 is automatically created for the estimated travel time required to get to the location of the calendar entry 350, that travel-time calendar entry 333 is linked to the calendar entry 350. In other words, if the start time 360 of the calendar entry 350 is changed (e.g. if the calendar entry 350 is deleted) then the time-travel calendar entry 333 will be automatically altered to reflect this change. For example, if the calendar entry 350 is deleted, then the time-travel calendar entry 333 will also be deleted. By way of further example, if the start time 360 of the calendar entry 350 is moved, then the time-travel calendar entry 333 will be automatically updated to reflect this change. There is also an indication that travel-time calendar entries 333 are travel-time calendar entries 333 and not calendar entries 350. This indication may be a flag stored in memory of the mobile device 102 and associated with the travel-time calendar entry 333, for example. This prevents a travel-time calendar entry 333 from being created and associated with another travel-time entry 333.

To respond to changing real-time travel conditions, for example, the travel-time calendar entry may be dynamically updated. The ETA agent 506 may periodically submit pairs of geospatial locations to the server 504 in order to receive an estimated travel time. The geospatial locations may, for example, be flagged to indicate which of the two is the initial (or starting) location and which of the two is the second (or end) location.

The geospatial location of the mobile device may, for example, be retrieved from or determined by a locator system such as a global positioning system (GPS) integrated with or found on the mobile device 102. This GPS may determine the location of the mobile device 102 using known or familiar techniques.

There may be a threshold associated with each calendar entry 350 indicating when the ETA agent 506 may submit the geospatial location of the mobile device 102 and the geospatial location of the calendar entry to the server 504. For example, a calendar entry 350 may be associated with a time threshold or a distance threshold. The time threshold may be a time of day before which the start time of the travel-time calendar entry is not dynamically updated. Similarly, the distance threshold may be a distance such that when the geospatial locations of the mobile device 102 and the calendar entry are farther apart than that distance, the travel-time calendar entry is not dynamically updated.

It is recognized that the server 504, rather than the mobile device 102, may create a travel-time calendar entry based on two received geospatial locations. The server 504 may then communicate the new calendar entry to the mobile device 102 for insertion into the calendar application.

Each time the ETA agent 506 communicates geospatial locations to the server 504, the server 504 may respond with a new estimated travel time between the starting geospatial location and the ending geospatial location. This updated travel time may be used to calculate a new start time 360 for the new calendar entry. This new start time 360 may, for example, be a result of updated travel information as determined by the probes 502 (e.g. an accident or traffic congestion) or as a result of a new starting geospatial location of the mobile device 102 (as determined by the GPS on the mobile device 102). A new starting location of the mobile device 102 may result in a longer distance between the starting location and the ending location, for example. The new start time 360 for the new calendar entry may thereby be dynamically readjusted.

A calendar entry 350 may be created with a geospatial location entry 422 that is in a different time zone from the present time zone of the mobile device 102. No travel entry 333 will be created for that calendar entry 350 until the mobile device 102 and the geospatial location 422 of the calendar entry 350 are in the same time zone. However, two calendar entries 350 may be created with a geospatial locations 422 in the same time zone, but in a different time zone as the mobile device 102. A travel entry 333 may be created for the calendar entry 350 that has the later starting time 426. Methods for determining the time zone of various locations, including that of the mobile device 102, are known to people of ordinary skill in the art.

The mobile device 102 may also have one or more speakers for emitting an audible alarm.

If the present time as determined from the device 102 (e.g. from calendar application or from a clock on the mobile device 102 or network 510) is within the time allotted to the travel-time calendar entry then an alarm or cue may be emitted from the mobile device 102. For example, there may be a cue provider attached to or integrated with the mobile device for emitting the alarm or cue (for example, the cue provider may be an alarm clock).

The alarm or cue may, for example, be audible, visual or tactile. Further, the alarm or cue may comprise a notification message to a user, such as a visual message on the display screen of the mobile device 102 stating "leave now or be late!" Further, the alarm or cue may comprise a prompt, prompting the user to open the calendar entry associated with the alarm. Still further, the alarm or cue may comprise a display showing the optimal or near optimal route, which may have been sent to the mobile device 102 by the server 504.

The alarm or cue could be an audible message emanating from the mobile device 102 or it could be a message displayed on the user interface of the mobile device indicating the possible incident that may have caused a delay along a possible travel route. The probes 502, for example, could also monitor causes for delays, such as a traffic accident or traffic congestion, along its associated road segment (i.e. along the road segment it monitors).

A calendar entry may represent a meeting that a user is scheduled to have with other attendees. The contact information of the other attendees may be associated with the calendar entry. For example, the contact information of the other attendees may be listed in a "notes" section of the calendar entry, or the contact information may be in the user's address book in the mobile device 102 and may be linked to from the calendar entry. In such a situation, the alarm or cue could be a pre-configured notification to the other attendees. For example, the alarm or cue may initiate an email or instant message which may be sent to the other attendees indicating that the user may be late to the scheduled meeting.

A calendar entry may be an at-risk calendar entry if the present time is within a certain time period of the start time 360 of the time entry 370 for the calendar entry. For example, a calendar entry may be at-risk if the starting time 360 of the time entry is in ten minutes or less. An at-risk calendar entry may indicate, for example, that there is a heightened risk that the user will not be able to travel from the geospatial location of the mobile device 102 to the geospatial location of the calendar entry in time for the start of the calendar entry given the travel information. An at-risk calendar entry may be displayed with a different colour background (amber or yellow, for example) from the other entries so that it stands out from the remaining calendar entries when viewed from a calendar application display screen.

Alternatively, a calendar server external to the mobile device 102 may be in communication with the server 504. The calendar server may be in communication with a user's mobile device 102 (at least periodically) and may store and maintain the user's calendar application information. The calendar server may itself communicate to the server 504 the two geospatial locations in the user's calendar. The server 504 may then communicate the travel information to the calendar server, which in turn may provide or communicate cues or alarms to the mobile device 102.

The alarm or cue may also comprise a countdown timer. The countdown timer may be a timer displayed on the home screen of the mobile device 102. For example, the countdown timer may be located on the top banner of the home screen near where the device time is displayed. The alarm or cue may activate the countdown timer when the start time of a travel-time calendar entry is reached, for example. The countdown timer may then begin a countdown until the start time 360 of the calendar event.

Alternatively, the countdown timer may be activated (i.e. may begin counting down) a set amount of time before the start time 360 of the travel-time calendar entry. For example, the countdown timer may start counting down fifteen minutes before the start time 360 of the travel-time calendar entry. It is recognized that the start time 360 of the calendar entry may change in response to periodic real-time travel updates communicated from the server 504. If the countdown timer has started counting down, then any adjustment to the start time 360 of the travel-time calendar entry in response to real-time travel information may, for example, be reflected in a further alarm or cue. The further alarm or cue may be a message indicting the estimated time of arrival at the location of the calendar entry or a new suggested departure time for reaching the location of the calendar entry before the start time 360.

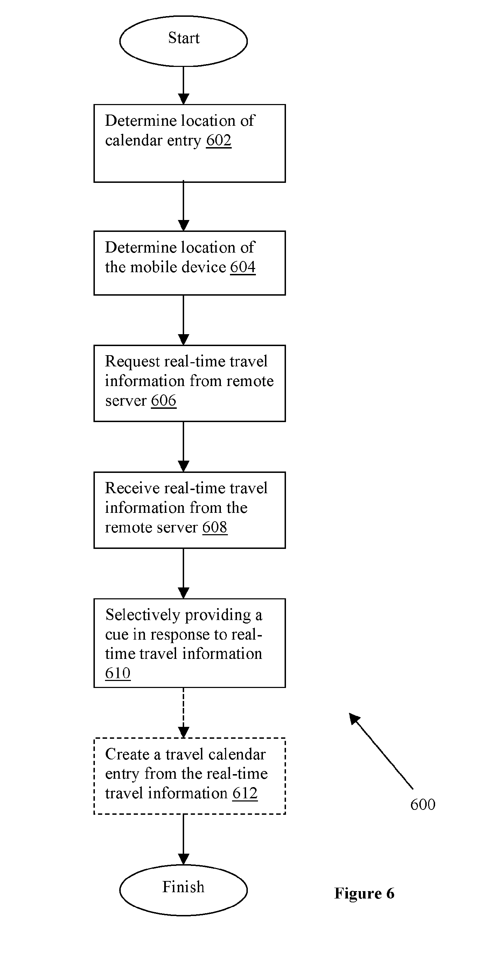

A method of providing calendar notification information is shown in Figure 6.

At step 600, the geospatial location of the calendar entry is determined. The location of the calendar entry may be configurable using the user interface of the mobile device 102. This calendar entry has a start time 360 and an end time 370. The location field 404 may hold the location of the calendar entry. The location data 422 (e.g. "123 Main Street, Centreville, Ontario") may be linked to a map in the memory of the device, for example, so that the mobile device 102 can maintain information regarding the geospatial location of the calendar entry.

At step 602, the geospatial location of the mobile device 102 is determined, e.g. through a GPS, as described above. Alternatively, a user may input his or her location through the user interface of the mobile device 102.

At step 604, real-time travel information is requested from a remote server 504. As described above, the request can include the location of the calendar entry and the location of the mobile device 102. This request may be communicated over the network 510.

At step 606, the mobile device 102 receives the real-time travel information from the remote server 504 in response to the request. The real-time travel information may, for example, comprise the estimated time of arrival at the location of the calendar entry from a departure from the location of the mobile device 102.

At step 608, the real-time travel information is received from the remote server 504. The server 504 could, for example, send the real-time travel information over the network 510 to the mobile device 102.

At step 610, a cue or alarm is selectively provided in response to the real-time travel information being received at the mobile device 102. The cue or alarm may be of a type described above. The cue or alarm may be one of a visual cue, audible cue or tactile cue. The cue may be provided if the scheduled calendar entry is determined to be an at-risk calendar entry, for example.

Optionally, at step 612, a travel calendar entry may be created or be dynamically updated from the real-time travel information. This travel calendar entry may be automatically created and placed into the calendar application on the mobile device 102. Further, the travel calendar entry may comprise an estimated departure time. The estimated departure time may be the start time for the travel calendar entry. The estimated departure time may be updated in response to real-time changes in travel time.

It is understood that the herein described operations (e.g. any or all of steps 602, 604, 606, 608, 610, 612) may be performed for newly created calendar entries or to dynamically update existing calendar entries. For example, the start time of the travel calendar entry may be dynamically updated in response to a new estimated travel time such that the start time of the travel calendar entry is the start time of the calendar entry minus the new estimated travel time.

The server 504 may communicate certain real-time traffic updates to the mobile device 102. For example, a probe 502 may communicate traffic accident information to the server 504 which may, in turn, communicate the traffic accident information to the mobile device 102. The traffic accident information may, for example, be in respect of traffic along a road segment which is on a travel route between the mobile device 102 and the location of a calendar event. The certain real-time traffic updates communicated to the mobile device 102 may include accident information or road closures or congestion information, for example.

One or more embodiments have been described by way of example. It will be apparent to persons skilled in the art that a number of variations and modifications can be made without departing from the scope of what is defined in the claims.

## Claims

1. A computer implemented method of providing calendar notification information on a mobile device (102) having a user interface, comprising the steps of:
requesting an estimated travel time between a determined geospatial location of the mobile device (102) and a determined geospatial location of a calendar entry (350) from a remote server (504), the calendar entry (350) having a start time (360);
receiving the estimated travel time from the remote server (504) in response to the request; and,
selectively providing a cue in response to the estimated travel time.

2. The method of claim 1, further comprising determining if the estimated travel time is less than the time remaining until the start time (360) of the calendar entry (350).

3. The method of claim 1 or claim 2 wherein the step of selectively providing a cue comprises providing a cue if the estimated travel time is less than the time remaining until the start (360) time of the calendar entry (350).

4. The method of any one of claims 1 to 3 further comprising creating a travel calendar entry (333) wherein the start time of the travel calendar (333) entry comprises the start time of the calendar entry (350) minus the estimated travel time.

5. The method of claim 4 further comprising dynamically updating the start time of the travel calendar entry (333) in response to a new estimated travel time such that the start time of the travel calendar entry (333) is the start time of the calendar entry (350) minus the new estimated travel time.

6. The method of any one of claims 1 to 5 wherein the cue comprises one of a visual cue, audible cue and tactile cue.

7. The method of any one of claims 1 to 6 further comprising receiving at least one travel route, the travel route from the geospatial location of the mobile device (102) to the geospatial location of the calendar entry (350).

8. The method of any one of claims 1 to 7 wherein the calendar entry (350) comprises a meeting with other attendees and the cue comprises one of an email message and an instant message to at least one of the other attendees.

9. The method of any one of claims 1 to 8 further comprising configuring the geospatial location of the calendar entry (350) using the user interface of the mobile device.

10. A mobile device (102) comprising a processor and memory coupled there for communicating with a server (504) to receive calendar notification information said memory storing instructions and data for execution by the processor to configure the mobile device (102) to perform a method in accordance with any one of claims 1 to 9.

11. A computer program product comprising a memory storing instructions and data to configure a processor of a communication device to perform a method in accordance with any one of claims 1 to 9.

## Amended claims

### Amended claims in accordance with Rule 137(2) EPC.

**1.** A computer implemented method of providing calendar notification information on a mobile device (102) having a user interface, comprising the steps of:
requesting an estimated travel time between a determined geospatial location of the mobile device (102) and a determined geospatial location of a calendar entry (350) from a remote server (504), the calendar entry (350) having a start time (360);
receiving the estimated travel time from the remote server (504) in response to the request;
creating a travel calendar entry (333) wherein the start time of the travel calendar entry comprises the start time of the calendar entry (350) minus the estimated travel time; and
selectively providing a cue in response to the estimated travel time.

**2.** The method of claim 1, further comprising determining if the estimated travel time is less than the time remaining until the start time (360) of the calendar entry (350).

**3.** The method of claim 1 or claim 2 wherein the step of selectively providing a cue comprises providing a cue if the estimated travel time is less than the time remaining until the start (360) time of the calendar entry (350).

**4.** The method of any one of claims 1 to 3 further comprising dynamically updating the start time of the travel calendar entry (333) in response to a new estimated travel time such that the start time of the travel calendar entry (333) is the start time of the calendar entry (350) minus the new estimated travel time.

**5.** The method of any one of claims 1 to 4 wherein the cue comprises one of a visual cue, audible cue and tactile cue.

**6.** The method of any one of claims 1 to 5 further comprising receiving at least one travel route, the travel route from the geospatial location of the mobile device (102) to the geospatial location of the calendar entry (350).

**7.** The method of any one of claims 1 to 6 wherein the calendar entry (350) comprises a meeting with other attendees and the cue comprises one of an email message and an instant message to at least one of the other attendees.

**8.** The method of any one of claims 1 to 7 further comprising configuring the geospatial location of the calendar entry (350) using the user interface of the mobile device.

**9.** The method of any one of claims 1 to 4 wherein the cue comprises a countdown timer for counting down until the start time of the calendar event.

**10.** A mobile device (102) comprising a processor and memory coupled there for communicating with a server (504) to receive calendar notification information said memory storing instructions and data for execution by the processor to configure the mobile device (102) to perform a method in accordance with any one of claims 1 to 8.

**11.** A computer program product comprising a memory storing instructions and data to configure a processor of a communication device to perform a method in accordance with any one of claims 1 to 8.
